# FASCICULE DE BREVET EUROPEEN

(11) **EP 0 711 254 B1**
(45) Date de publication et mention de la délivrance du brevet: **23.04.1997**
(21) Numéro de dépôt: 94921691.5
(22) Date de dépôt: 06.07.1994
(51) Int. Cl.: C03B 5/02, C03B 5/00, B09B 3/00, F27B 1/00

(54) **PROCEDE D'INERTAGE PAR TORCHE A PLASMA DE PRODUITS CONTENANT DES METAUX, EN PARTICULIER DES METAUX LOURDS ET INSTALLATION POUR SA MISE EN UVRE**
VERFAHREN ZUM INERTIREN VON METALLHALTIGEN PRODUKTEN MITTELS EINES PLASMABRENNERS INSBESONDERE SCHWERMETALLE UND VORRICHTUNG ZUM AUSFÜHREN DIES VERFAHRENS
METHOD OF RENDERING INERT, WITH THE AID OF A PLASMA TORCH, PRODUCTS CONTAINING METALS, IN PARTICULAR HEAVY METALS, AND FACILITY FOR CARRYING OUT SAID METHOD

(30) Priorité: 28.07.1993 FR 9309513
(43) Date de publication de la demande: 15.05.1996
(73) Titulaire: Europlasma, F-33200 Bordeaux (FR)
(72) Inventeur: PINEAU, Didier, F-33110 Le Bouscat (FR); CAMACHO, Salvador, L., Raleigh, NC 27613 (US)
(74) Mandataire: Thébault, Jean-Louis
(86) Numéro de dépôt international: FR9400833
(87) Numéro de publication internationale: WO9504004

(56) Documents cités:
- EP-A- 0 265 051
- DE-A- 4 035 049
- US-A- 3 917 479
- US-A- 5 181 795

## Description

La présente invention a trait à un procédé perfectionné pour rendre inerte, par vitrification à l'aide d'une torche à plasma, notamment d'arc, des produits contenant des métaux, en particulier des métaux lourds et se présentant par exemple sous forme particulaire ou pulvérulente, notamment des résidus solides provenant de l'incinération de déchets ménagers, industriels, hospitaliers ou autres.

L'invention sera décrite ci-après dans son application à l'inertage de résidus solides provenant de l'incinération d'ordures ménagères, et plus précisément des résidus constitués par les cendres dites volantes, les cendres dites sous chaudière, ainsi que les gâteaux de filtration provenant de la déchloruration des cendres volantes, mais il est entendu que le procédé de l'invention peut s'appliquer à l'inertage d'autres types de déchets ou résidus solides, en particulier pulvérulents ou particulaires, contenant des métaux, en particulier des métaux lourds et, d'une manière générale, à l'inertage par vitrification de tous produits pulvérulents ou particulaires ou non contenant des métaux lourds et qu'il convient de piéger en vue d'une réutilisation ou d'un stockage dans des conditions de sécurité acceptables.

Les résidus solides provenant des incinérateurs, tels que les cendres volantes, les cendres sous-chaudière et les gâteaux de filtration évoqués ci-dessus, contiennent des produits toxiques, par exemple des métaux lourds tels que le plomb, le zinc ou le cadmium par exemple, ainsi que des sels métalliques très solubles et facilement entraînables par les eaux pluviales, qui constituent une source importante de pollution des sols et des nappes phréatiques. Leur quantité est telle qu'elle justifie une mise en décharge spéciale.

Du fait du coût d'une telle mise en décharge et de la tendance réglementaire vers une obligation de rendre inertes de tels résidus, on a déjà proposé d'effectuer leur inertage par vitrification.

A cet effet, divers moyens ont été proposés pour porter notamment des résidus d'épuration des fumées d'incinération d'ordures ménagères, dénommés REFIOM, à une température suffisamment élevée, généralement supérieure à 1300°C, pour les rendre liquides, afin d'obtenir un résidu emprisonnant les composés toxiques, qui se présente, après refroidissement, comme une matrice solide amorphe.

Un procédé de ce type est décrit dans le document DE-A-40 35 049.

La vitrification apporte une qualité d'inertage du résidu solide très supérieure à celle procurée par les autres techniques et est actuellement le seul traitement qui permette de respecter les dernières normes sur les eaux de lixiviation. De plus, la vitrification peut éviter la mise en décharge du résidu et permet éventuellement de le revaloriser.

Toutefois, les moyens actuels de vitrification présentent des inconvénients, en particulier une consommation énergétique élevée pour l'obtention des hautes températures requises et une émission en quantité importante d'effluents gazeux à traiter pour certains d'entre eux.

Pour obtenir les hautes températures nécessaires à la vitrification, on a utilisé jusqu'à présent l'électrobrûleur, l'oxybrûleur, l'induction, l'arc électrique et la torche à plasma d'arc soufflé ou à plasma d'arc transféré.

Ces divers moyens présentent leurs avantages et leurs inconvénients.

Sans entrer dans le détail des mérites et points faibles de chaque technique, on notera simplement, la présente invention mettant en oeuvre une torche à plasma d'arc, que les procédés à plasma d'arc procurent une énergie mieux contrôlée dans la zone de réaction, résultant de l'injection en quantités modulables de différents gaz dans la torche qui permet d'obtenir les conditions thermochimiques adéquates. Il en résulte une grande souplesse d'adaptation et d'utilisation ainsi que la minimisation des polluants secondaires issus des réactions thermochimiques.

Toutefois, ces procédés et installations existants, à plasma d'arc, soufflé ou transféré, ne sont pas pleinement satisfaisants au plan du bilan énergétique, du traitement de la pollution secondaire, notamment des gaz de sortie du four à plasma et de leur coût de mise en oeuvre.

La présente invention a précisément pour but de pallier à ces inconvénients en proposant une technique de vitrification par torche à plasma améliorée, permettant en outre d'optimiser la conduite de l'inertage, notamment des REFIOM, par une meilleure souplesse d'utilisation et capacité d'adaptation en fonction des impératifs des installations d'incinération des ordures ménagères.

A cet effet, l'invention a pour objet un procédé d'inertage par torche à plasma, notamment d'arc, de produits contenant des métaux, en particulier des métaux lourds, notamment des résidus d'épuration des fumées d'incinération d'ordures ménagères, dans lequel lesdits produits, sous forme solide, en particulier pulvérulente ou particulaire, sont vitrifiés dans un four à l'aide de ladite torche et les produits fondus sont évacués en continu ou semi-continu au fur et à mesure de leur formation pour être refroidis, les gaz et fumées issus de la zone de réaction étant récupérés et traités, caractérisé en ce qu'il consiste à faire fonctionner la torche de manière à maintenir le plasma d'arc, entre le bain de fusion des produits dans ledit four et la torche, dans une zone de réaction entre le plasma et les produits crus à traiter, en permanence submergée par la masse des produits crus, en alimentant en continu le four en produits crus.

De préférence, l'installation de mise en oeuvre du procédé comprend une ou plusieurs torches agencées dans un même four en étant disposées verticalement ou avec une certaine inclinaison par rapport à la verticale, les produits crus à traiter acheminés dans le four en partie supérieure se déplacent dans ce dernier par gravité, la partie inférieure de la ou des torches étant en permanence immergée dans lesdits produits et les produits fondus du bain de fusion s'écoulent par gravité.

Avantageusement et afin d'optimiser le procédé, on analyse à intervalles de temps les nature et proportions des constituants des produits à traiter et on détermine à partir de ces analyses les nature et proportions de divers additifs solides, ajoutés aux produits avant introduction dans le four, en vue d'améliorer les conditions d'acheminement des produits crus vers la zone de réaction, les conditions de réaction et les conditions de génération et récupération des gaz issus de la zone de réaction.

Suivant une autre caractéristique du procédé de l'invention, un ou plusieurs additifs gazeux sont introduits dans ou à la sortie de la ou des torches en vue par exemple d'enrichir en oxygène le milieu gazeux afin d'assurer un meilleur piégeage des métaux.

L'invention a également pour objet une installation pour la mise en oeuvre du procédé défini ci-dessus et dont on va décrire maintenant un mode de réalisation, à titre d'exemple uniquement et en regard des dessins annexés sur lesquels :
- Figure 1 est une vue schématique d'une installation à four à torche à plasma d'arc en mode submergé selon l'invention ;
- Figure 2 est une vue plus détaillée d'un four à torche à plasma selon l'invention ;
- Figure 3 est une vue schématique d'un four selon l'invention équipé d'une torche à plasma fonctionnant en arc non-transféré ;
- Figure 4 est une vue schématique d'un four selon l'invention équipé d'une torche à plasma fonctionnant en arc transféré ;
- Figure 5 est une vue schématique d'un four à plusieurs torches à plasma, et
- Figure 6 est une vue schématique d'un four dit à auto-creuset selon l'invention.

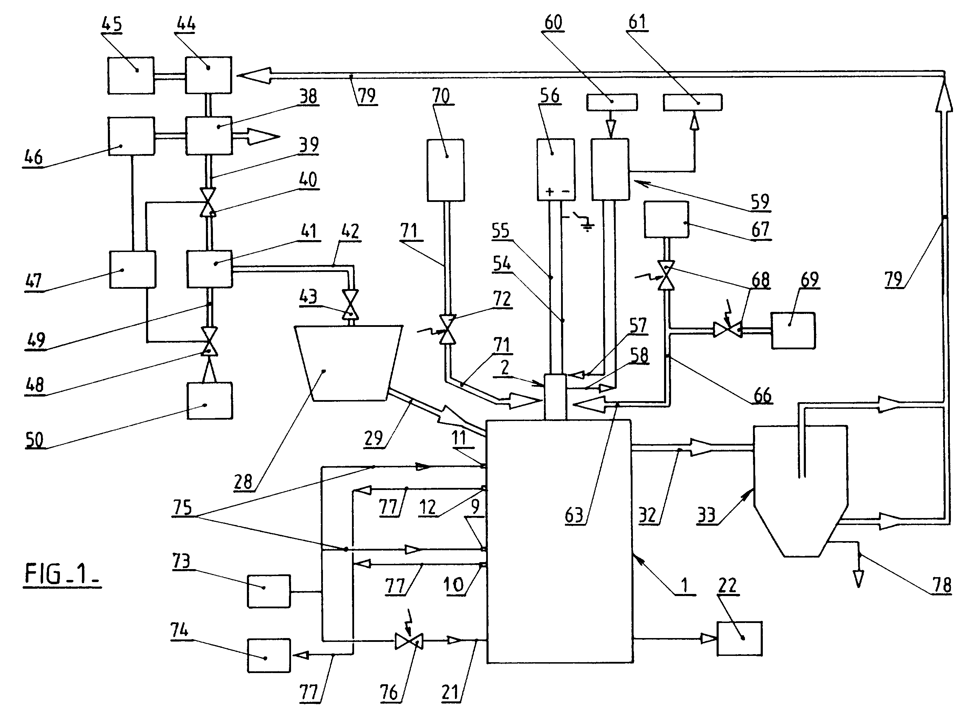

Sur la figure 1 on a représenté d'une manière générale en 1 un four selon l'invention dans lequel est disposée verticalement une torche à plasma d'arc 2.

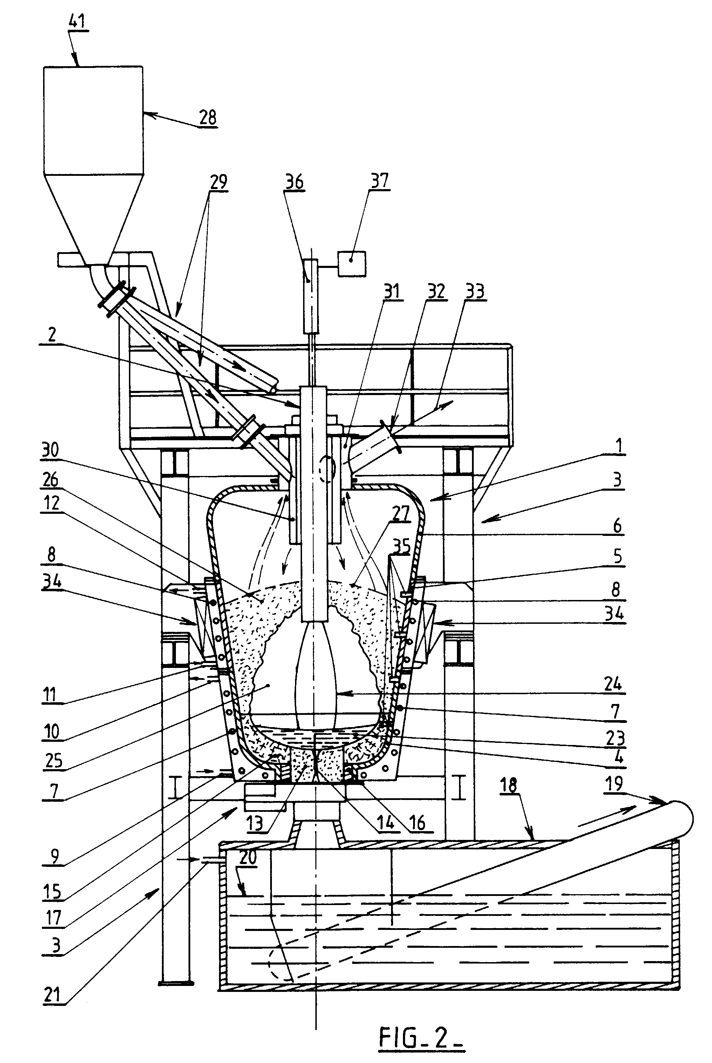

Un mode de réalisation d'un tel four est représenté plus en détail sur la figure 2.

Le four 1 est supporté par un bâti 3 et comprend une enveloppe métallique en trois sections superposées 4,5 et 6, les deux sections inférieures 4 et 5 étant refroidies par deux circuits d'eau distincts, symbolisés en 7 et 8, munis de leurs entrées et sorties respectives 9, 10 et 11,12.

Dans la partie inférieure 4 du four est disposé un creuset en matériau réfractaire constitué de trois pièces : une pièce 13 de coulée de produits fondus, percée d'un trou de coulée 14 ; un réservoir pied de bain 15 et une pièce annulaire 16.

En dessous du creuset 13 à 16 est monté un dispositif conventionnel d'obturation 17, interposé entre le creuset et une enceinte de trempe 18 munie d'un convoyeur 19 de relevage des granulats de vitrifiat. L'extrémité inférieure du convoyeur 19 plonge dans l'eau de trempe 20, maintenue à niveau dans l'enceinte 18 par un circuit d'amenée d'eau 21.

Le convoyeur 19 évacue le vitrifiat vers un convoyeur de reprise (non représenté) en direction d'une unité de stockage 22 (figure 1).

Sur la figure 2 on a représenté schématiquement en 23 le bain liquide de produits fondus, en 24 le plasma généré par la torche 2, en 25 la zone de réaction des REFIOM crus sous l'effet du plasma de la torche, cette zone de réaction étant, conformément à l'invention, submergée par la masse 26 des REFIOM crus dont on a symbolisé en 27 le niveau dans le four.

Les REFIOM crus sont acheminés dans le four 1 par un système d'alimentation comprenant une trémie 28 formant réservoir tampon et un jeu 29 de goulottes amenant, par voie gravitaire, les produits dans un manchon 30 entourant la torche 2.

Les goulottes 29 sont par exemple au nombre de trois régulièrement réparties autour du manchon 30, afin que les produits soient régulièrement distribués dans l'intervalle entre le manchon 30 et la torche 2.

Les gaz et fumées issus de la zone de réaction sont récupérés en partie supérieure du four 1 par un manchon 31 coaxial au manchon 30 et entourant ce dernier.

Sur le manchon 31 est piquée une conduite 32 d'évacuation des gaz et fumées vers un cyclone à poussières 33 (figure 1).

Par ailleurs, le four est muni extérieurement, au droit de sa section intermédiaire 5, d'un dispositif symbolisé en 34 destiné à engendrer des ébranlements ou vibrations dans la masse 26 des REFIOM crus pour faciliter leur descente gravitaire et leur tassement. Le dispositif 34 est par exemple un dispositif générateur d'ultrasons ou un dispositif mécanique à balourd.

Le four est muni intérieurement, au droit de ses deux sections inférieures 4 et 5, de détecteurs de niveau 35 du bain liquide 23 et de niveau (27) des REFIOM, du type sonde gamma par exemple, étagés le long de la paroi interne du four.

Enfin, la torche 2 est montée réglable en position en hauteur, ou en éloignement, par rapport au creuset 13 à 16. A cet effet, la torche est montée coulissante verticalement dans le manchon 30 et peut être déplacée par un dispositif approprié symbolisé en 36, par exemple un système à vérin hydraulique, piloté par un dispositif de commande approprié 37.

La trémie 28 est elle-même alimentée à partir d'une unité de stockage 38 reliée par une conduite 39 munie d'une vanne 40 à un mélangeur 41 relié, par une conduite 42 équipée d'une vanne 43, à ladite trémie 28.

Les REFIOM stockés en 38 proviennent d'une unité 44 de traitement des fumées d'une installation d'incinération des ordures ménagères symbolisée en 45.

Un analyseur 46 des constituants des REFIOM est connecté à l'unité de stockage 38, ainsi qu'à un contrôleur 47 commandant la vanne 40 et une pluralité de vannes 48 interposées dans des conduits 49 reliant le mélangeur 41 à une pluralité d'unités 50 de stockage/délivrance d'additifs solides.

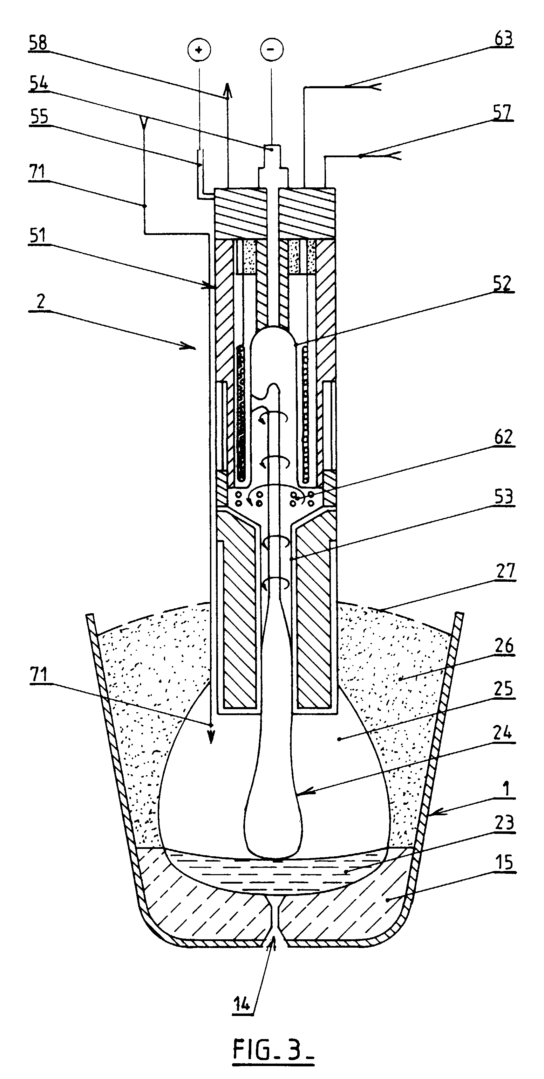

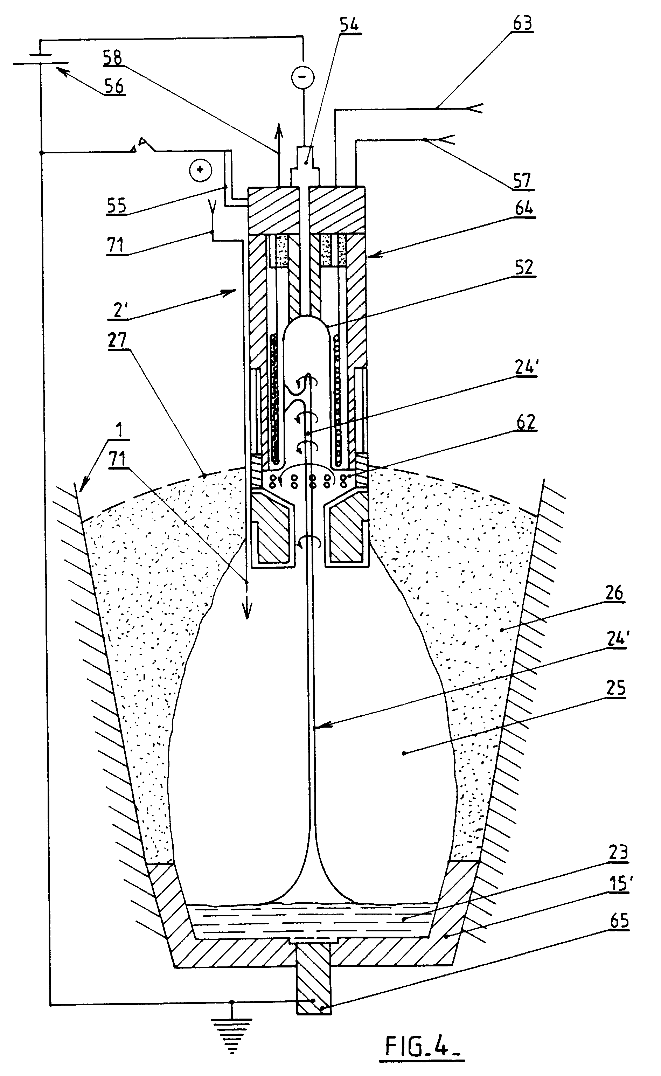

La torche à plasma 2 peut être du type à arc non-transféré, comme illustré par la figure 3, ou du type à arc transféré, comme illustré par la figure 4, ces deux types étant bien connus et ne nécessitant pas une description détaillée.

La torche 2 de la figure 3 est par exemple du type décrit dans le document FR-2.654.294 et comporte, à l'intérieur d'un corps tubulaire 51, une électrode amont ou cathode 52 et une électrode aval ou anode 53, reliées par des connexions électriques respectives 54 et 55 à une source d'alimentation électrique appropriée 56 (figure 1).

Entre les électrodes 52 et 53 et leur support sont ménagés des circuits de refroidissement reliés par une entrée d'eau 57 et une sortie d'eau 58 à un échangeur de chaleur 59 (figure 1) dont on a schématisé en 60 et 61 respectivement l'entrée et la sortie d'eau primaire.

En 62 est représenté le dispositif d'injection de gaz plasmagène, entre les deux électrodes, le gaz étant acheminé par une entrée 63.

Le plasma généré par la torche 2 est représenté en 24.

La figure 4 illustre un type de torche à arc transféré, comportant, à l'intérieur d'un corps tubulaire 64, une électrode amont 52 reliée à une borne électrique 54, un circuit de refroidissement relié à une entrée d'eau 57 et à une sortie d'eau 58 et un dispositif 62 d'injection de gaz plasmagène relié à une entrée de gaz plasmagène 63.

L'arc 24' de la torche 2' est généré entre l'électrode 52 et le creuset 15' qui est muni à cet effet d'une électrode de retour de courant 65, par exemple en graphite, reliée électriquement à la borne 55 de connexion de la torche 2' au circuit d'alimentation électrique 56. Sur la figure 4, on n'a pas représenté le trou de coulée 14 du creuset 15' qui peut être par ailleurs similaire à celui représenté en 13 à 16 sur la figure 2.

L'entrée 63 de gaz plasmagène de la torche (2 ou 2') est reliée, par une canalisation commune 66 (figure 1), soit à une source d'air comprimé 67, via une vanne 68, soit à une autre source de gaz plasmagène 69, via une autre vanne 68.

En outre, à la torche (2,2') est associée une source d'additif gazeux plasmagène 70, via une canalisation 71 et une vanne 72, ladite canalisation 71 (représentée symboliquement sur les figures 3 et 4) acheminant l'additif gazeux extérieurement au corps (51,64) de la torche pour l'introduire, à l'extrémité inférieure de la torche, dans la zone de réaction 25.

En se reportant à nouveau à la figure 1, on a représenté en outre schématiquement un système de fourniture d'eau de refroidissement du four et d'eau de trempe, comprenant une arrivée d'eau 73 et une sortie d'eau 74. L'arrivée d'eau 73 est reliée, par un circuit d'introduction d'eau de refroidissement 75, au four 1, et, par le circuit d'eau de trempe 21 muni de sa vanne 76, à l'enceinte de trempe 18 (figure 2).

Le retour d'eau de refroidissement à la sortie 74 s'effectue par des conduites 77.

Enfin, le cyclone 33 comporte une sortie 78 de récupération des résidus solides, par exemple à des fins de recyclage, cependant que les résidus gazeux sont évacués par la canalisation 79 vers l'unité 44 de traitement des fumées, constituée par exemple par des électro-filtres.

Le fonctionnement du four est le suivant.

Les REFIOM crus 26, auxquels sont, éventuellement mais la plupart du temps néanmoins, mélangés des additifs solides, forment en permanence comme une gangue enveloppant la zone de réaction 25 où se trouve le plasma (24,24') de la torche (2,2'), entre cette dernière et le bain liquide 23 de produits fondus.

La masse 26 est pulvérulente ou particulaire et se laisse traverser par les gaz issus de la zone de réaction et se dirigeant en partie supérieure du four. Ils sont ainsi refroidis au contact de la masse 26, ce qui permet de réduire leur température de sortie aux alentours de 200°C.

Suivant un mode préféré de mise en oeuvre du procédé, les REFIOM à traiter stockés dans l'unité 38, par exemple des cendres volantes, sont analysés périodiquement par l'analyseur 46 et les informations de l'analyse sont fournies à un calculateur (par exemple intégré au contrôleur 47) qui détermine, en fonction de critères prédéterminés et suivant un processus programmé, la nature et la quantité de chaque type d'additif solide à ajouter aux cendres volantes pour optimiser l'efficacité du procédé. Le calculateur (47) pilote les vannes 48 des réservoirs d'additifs 50 en sorte de mélanger grâce au mélangeur 41 le ou les additifs auxdites cendres volantes.

Le mélange est stocké dans l'unité tampon constituée par la trémie 28 d'introduction en continu, via les goulottes 29, des produits dans la partie supérieure du four 1.

Divers additifs peuvent être utilisés conformément à l'invention afin, par exemple, d'améliorer le rendement énergétique, d'améliorer la capture ou piégeage des matériaux toxiques dans le vitrifiat obtenu, de répondre à un cahier des charges spécifiques du vitrifiat en fonction de son utilisation ultérieure.

L'emploi d'additifs solides permet de jouer sur divers paramètres tels que viscosité, conduction électrique, réactivité chimique.

Des additifs, tels que du charbon pulvérulent par exemple, peuvent être ajoutés pour une meilleure fluidité du mélange, facilitant son glissement à l'intérieur du four et pour homogénéiser dans la masse 26 les résidus à inerter.

D'autres additifs, tels que des fondants comme la magnésie par exemple, peuvent être ajoutés pour diminuer la température des points de fusion du mélange.

D'autres additifs, de type oxydant, sont de nature à créer des réactions chimiques spécifiques aux métaux à piéger et à rendre la masse 26 plus perméable aux gaz issus de la zone de réaction, en sorte d'obtenir une traversée plus homogène de la masse 26 par lesdits gaz.

La quantité des additifs ajoutés se situe dans une plage de 0 à 5 % environ en poids de cendres volantes ou autres produits à inerter.

Au fur et à mesure que la fusion s'opère, le bain liquide 23 se reconstitue et est de temps en temps évacué par fraction, par gravité, par le trou 14 en ouvrant le dispositif d'obturation 17. Le bain 23 se reconstitue en permanence.

Les cendres volantes du mélange 26, au fur et à mesure qu'elles atteignent la zone de réaction 25, fondent et s'en vont rejoindre par ruissellement le bain 23, tandis que les gaz s'échappent au travers du mélange cru 26 en lui cédant la plus grande part de leur énergie thermique. Il en résulte, d'une part, une amélioration du bilan énergétique et, d'autre part, une dépollution partielle des gaz issus de la zone de réaction, du fait de la condensation sur les produits crus 26 de la fraction évaporée des substances toxiques volatiles.

La température atteinte par le bain liquide 23 est par exemple de l'ordre de 1300°C.

La position en hauteur dans le four de la torche (2,2') est réglable grâce au vérin 36 piloté par le dispositif de commande 37. La position de la torche est notamment modifiée au démarrage du four afin de réduire la distance entre la torche et le creuset (13 à 16).

Au fur et à mesure que le bain liquide 23 se constitue, la torche est éloignée du creuset, le pilotage du vérin 36 s'effectuant à partir de divers paramètres et notamment les niveaux du bain 23 et des produits à traiter (26,27), grâce aux sondes gammas 35.

Le fait que le plasma (24,24') de la torche (2,2') soit submergé en permanence par des produits qui sont par ailleurs de nature réfractaire, permet d'éviter l'emploi de revêtements réfractaires, coûteux et fragiles, pour constituer les parois exposées du four.

C'est ainsi que le four 1 peut comporter une enveloppe métallique (4,5,6) simplement refroidie à l'eau. La section inférieure 4 du four peut être refroidie plus intensément que la section intermédiaire 5, grâce aux circuits d'eau indépendants (9,10 ; 11,12).

Il n'est pas nécessaire que le creuset soit métallique. Dans la chambre de trempe 18 s'opère la trempe rapide à l'eau. Les produits liquides de fusion tombant du creuset se solidifient en granulats, qui tombent sur le convoyeur 19 et sont évacués par ce dernier.

Le vitrifiat sous forme granulaire est stocké dans l'unité 22. Il peut être mis en décharge ordinaire ou, mieux, réutilisé par exemple comme matériau en vrac pour les chaussées.

Suivant une variante, lesdits produits liquides de fusion peuvent être dirigés dans des lingotières refroidies, conformées de façon à obtenir directement des objets réutilisables tels que des briques, pots de fleurs, etc...

Les gaz et fumées récupérés en partie supérieure du four sont acheminés par la canalisation 32 vers le cyclone 33 à des fins de récupération des résidus solides en 78, les résidus gazeux étant évacués vers le circuit 79 de retour vers l'unité de traitement des fumées 44 de l'installation d'incinération.

Des additifs gazeux ou plasmagènes peuvent être avantageusement fournis à la torche 2,2' conformément à l'invention, soit en étant injectés à l'intérieur de la torche via l'entrée 63, en provenance de la source 69, soit en étant injectés dans la zone de réaction 25, via la canalisation 71, en provenance de la source 70. Ces additifs ont pour but notamment d'assurer un meilleur piégeage des métaux et d'améliorer les transferts énergétiques.

Les additifs gazeux ou plasmagènes sont d'une manière générales des oxydants pour faciliter le piégeage des métaux. D'autres gaz pourront être utilisés pour améliorer par ailleurs les transferts énergétiques.

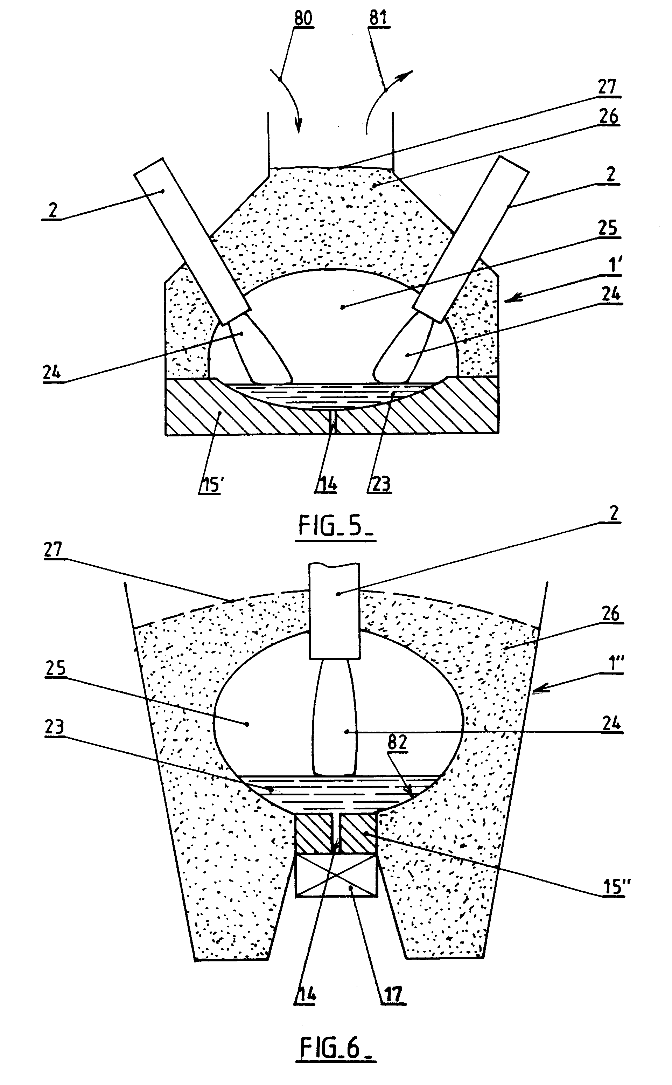

Suivant une variante illustrée schématiquement par la figure 5, un même four 1' peut comporter plusieurs torches 2, de préférence identiques, légèrement inclinées par rapport à la verticale et en direction du creuset 15'. On peut prévoir ainsi deux torches disposées symétriquement ou non, ou bien trois torches décalées entre elles de 120°. Les plasmas (24) des torches 2 créent une zone de réaction commune 25 dans la masse des produits à traiter 26 qui submerge les extrémités inférieures des torches.

Lesdits produits peuvent être acheminés dans le four 1' (flèche 80) par des moyens analogues à ceux (29,30) représentés sur la figure 2. De même, les gaz et fumées issus de la zone de réaction (flèche 81) peuvent être extraits par des moyens analogues à ceux (31,32) représentés sur ladite figure 2.

Les torches 2 sont, de préférence, réglables en éloignement par rapport au creuset 15'.

Enfin, la figure 6 représente schématiquement une autre variante de four selon l'invention, dite four à auto-creuset 1", dans laquelle le bain liquide 23 se constitue dans le fond 82 de la cavité de réaction 25 créée par le plasma (24) de la torche 2, dans la masse des produits à traiter 26. Cette cavité 25 forme ainsi un creuset, à l'exception de la partie centrale, constituée par une pièce de coulée 15" en matériau réfractaire percée d'un trou 14 d'écoulement des produits liquides 23.

La paroi du four 1" est bien entendu conformée, dans sa partie inférieure, de façon à constituer une réserve de produits à traiter 26 suffisante pour permettre le formation de l'auto-creuset (82). A la pièce de coulée 15" est associé un dispositif d'obturation 17. La paroi du four 1" est de préférence refroidie et constituée en sections comme le four 1 de la figure 2.

La torche 2 est également de préférence réglable en éloignement par rapport à la pièce 15".

La paroi interne du four 1 est de préférence inclinée de manière que le diamètre aille en s'élargissant au fur et à mesure que l'on s'éloigne du creuset 15, au moins jusqu'à la hauteur (27) des produits crus 26. Ainsi, au fur et à mesure que les gaz issus de la zone de réaction traversent en s'élevant la masse des produits crus 26, la section de passage s'agrandit, entraînant de la sorte une sortie des gaz en partie supérieure du four et une évacuation dans des conditions moins turbulentes évitant l'entraînement de particules solides.

Enfin, l'invention n'est évidemment pas limitée aux modes de mise en oeuvre représentés et décrits ci-dessus, mais en couvre au contraire toutes les variantes, notamment en ce qui concerne l'agencement et le mode de fonctionnement de la ou des torches 2,2', les formes, dimensions et agencement du four (1,1',1"), les moyens et conditions de solidification par trempe à l'eau ou à l'air, des produits liquides de fusion (23).

## Revendications

1. Procédé d'inertage par torche (2) à plasma, notamment d'arc, de produits contenant des métaux, en particulier des métaux lourds, notamment des résidus d'épuration des fumées d'incinération d'ordures ménagères, dans lequel lesdits produits, sous forme solide, en particulier pulvérulente ou particulaire, sont vitrifiés dans un four (1) à l'aide de ladite torche et les produits fondus sont évacués en continu ou semi-continu au fur et à mesure de leur formation pour être refroidis, les gaz et fumées issus de la zone de réaction étant récupérés et traités, caractérisé en ce qu'il consiste à faire fonctionner la torche (2) de manière à maintenir le plasma d'arc, entre le bain de fusion (23) des produits dans ledit four (1) et la torche (2), dans une zone (25) de réaction entre le plasma et les produits crus à traiter (26), en permanence submergée par la masse des produits crus (26), en alimentant en continu le four en produits crus.

2. Procédé suivant la revendication 1, caractérisé en ce que la torche (2) est disposée verticalement dans le four (1), les produits crus à traiter acheminés dans le four en partie supérieure se déplacent dans ce dernier par gravité, la partie inférieure de la torche étant en permanence immergée dans lesdits produits (26) et les produits fondus du bain de fusion (23) s'écoulent par gravité.

3. Procédé suivant la revendication 1 ou 2, caractérisé en ce qu'on analyse à intervalles de temps les nature et proportions des constituants des produits à traiter et on détermine à partir de ces analyses les nature et proportions de divers additifs solides, ajoutés aux produits avant introduction dans le four (1), en vue d'améliorer les conditions d'acheminement des produits vers la zone de réaction (25), les conditions de fusion et les conditions de génération et récupération des gaz issus de la zone de réaction.

4. Procédé suivant la revendication 3, caractérisé en ce que l'additif ajouté est un produit pulvérulent de nature à conférer au mélange acheminé dans le four (1) une meilleure fluidité, un meilleur glissement à l'intérieur du four (1) et une meilleure homogénéité.

5. Procédé suivant la revendication 3, caractérisé en ce que l'additif est un produit, tel qu'un fondant, destiné à diminuer la température des points de fusion du mélange.

6. Procédé suivant la revendication 3, caractérisé en ce que l'additif est un produit du type oxydant destiné à créer des réactions chimiques spécifiques aux métaux à piéger et à rendre la masse des produits à traiter (26) plus perméable aux gaz issus de la zone de réaction.

7. Procédé suivant l'une des revendications 3 à 6, caractérisé en ce que la quantité des additifs ajoutés est de l'ordre de 0 à 5% en poids des produits à inerter.

8. Procédé suivant l'une des revendications 1 à 7, caractérisé en ce qu'un ou plusieurs additifs gazeux sont introduits dans ou à la sortie de la torche (2).

9. Installation pour la mise en oeuvre du procédé selon les revendications 1 et 2 qui comprend :
- un four (1,1',1") définissant à sa partie inférieure un creuset (13 à 16) muni d'un trou (14) d'écoulement du bain liquide de fusion (23),
- au moins une torche à plasma d'arc (2,2') disposée dans le four pour créer et entretenir un plasma (24,24') entre ladite torche et ledit creuset, en sorte que la partie inférieure de la torche soit immergée dans la masse des produits à traiter (26),
- des moyens (29,30) d'alimentation en continu du four (1) en produit à traiter,
- des moyens (31,32) d'évacuation des gaz et fumées issus de la zone de réaction,
- des moyens (7,8) de refroidissement d'une partie au moins du four,
- et des moyens (18, 19) de solidification des produits liquides évacués par ledit creuset, disposés sous ce dernier.

10. Installation suivant la revendication 9, caractérisée en ce que le corps du four (1) est formé de plusieurs sections (4,5,6), refroidies de manière indépendante.

11. Installation suivant la revendication 9 ou 10, caractérisée en ce que le creuset (13 à 16) occupe toute la surface de fond du four (1) et est muni d'un dispositif (17) d'obturation du trou d'écoulement (14) dudit creuset.

12. Installation suivant la revendication 9 ou 10, caractérisée en ce que le creuset est constitué, pour partie, par la masse des produits à traiter (26) et, pour partie, par une pièce de coulée (15") à laquelle est associé un dispositif d'obturation (17).

13. Installation suivant l'une des revendications 9 à 12, caractérisée en ce qu'elle comporte un four (1') équipé de plusieurs torches (2), inclinées en direction du creuset (15') du four.

14. Installation suivant l'une des revendications 9 à 13, caractérisée en ce que la paroi interne du four (1) est munie de détecteurs de niveau (35) disposés à différentes hauteurs par rapport au creuset (13 à 16) et chargées de détecter le niveau (27) des produits à traiter (26) dans le four et/ou le niveau du bain liquide (23).

15. Installation suivant l'une des revendications 9 à 14, caractérisée en ce que le four (1) est muni d'un dispositif (34) susceptible de créer des ébranlements dans la masse des produits à traiter (26) présents dans le four (1).

16. Installation suivant l'une des revendications 9 à 15, caractérisée en ce qu'elle comporte un dispositif (28,29,38 à 43) d'acheminement des produits à traiter dans lequel est disposé un mélangeur (41) relié à une pluralité de dispositifs (48,50) d'adjonction d'additifs solides, sous la commande d'une unité de calcul et contrôle (47) reliée à un analyseur (46) des produits à traiter.

17. Installation suivant l'une des revendications 9 à 12, caractérisée en ce que la torche (2,2') est reliée à plusieurs dispositifs (68,69 ; 70 à 72) d'introduction sélective d'additifs gazeux ou plasmagènes, à l'intérieur de la torche ou à son extrémité.

18. Installation suivant l'une des revendications 9 à 17, caractérisée en ce que la torche (2,2') est montée réglable en éloignement par rapport au creuset (15,15',15").

19. Installation suivant l'une des revendications 9 à 18, caractérisée en ce que le four comporte une paroi interne inclinée en sorte que la section de passage des gaz issus de la zone de réaction (25) dans la masse des produits à traiter (26) va en s'accroissant au fur et à mesure que lesdits gaz traversent lesdits produits.

20. Installation suivant l'une des revendications 9 à 19, caractérisée en ce qu'elle comporte, en outre, un circuit (31,32) de récupération en partie supérieure du four (1) des gaz et fumées issus de la zone de réaction, comportant un cyclone dépoussiéreur (33) relié à une unité de traitement des fumées (44).

21. Installation suivant l'une des revendications 9 à 20, caractérisée en ce que l'acheminement des produits à traiter dans le four (1) et l'évacuation des gaz et fumées issus de la zone de réaction s'effectuent par des conduits concentriques (30,31) à des fins de répartition homogène desdits produits et d'extraction homogène desdits gaz et fumées.

22. Installation suivant l'une des revendications 9 à 21, caractérisée en ce que lesdits moyens de solidification sont des moyens de trempe (20) transformant les produits liquides de fusion en granulats de vitrifiat.

23. Installation suivant l'une des revendications 9 à 21, caractérisée en ce que lesdits moyens de solidification sont des lingotières refroidies de forme appropriée aux objets à obtenir.

24. Installation suivant l'une des revendications 9 à 23, caractérisée en ce que la ou les torches (2) sont du type à fonctionnement en arc non-transféré.

25. Installation suivant l'une des revendications 9 à 23, caractérisée en ce que la ou les torches (2') sont du type à fonctionnement en arc transféré.

## Patentansprüche

1. Verfahren zum Inertieren von Produkten, die Metalle, insbesondere Schwermetalle, enthalten, vorzugsweise von Reststoffen der Aufbereitung von Hausmüllverbrennungsabgasen, mittels eines Plasma-, insbesondere Lichtbogenbrenners (2), bei dem besagte Produkte in fester Form insbesondere pulver- oder teilchenförmig in einem Ofen (1) mittels besagten Brenners verglast werden und die geschmolzenen Produkte kontinuierlich oder halbkontinuierlich im Maße ihrer Bildung zum Abkühlen abgeführt werden, wobei die aus der Reaktionszone stammenden Gase und Brüden aufgefangen und behandelt werden, dadurch gekennzeichnet, daß der Brenner (2) so betrieben wird, daß der Plasmabogen zwischen dem Schmelzbad (23) der Produkte in besagten Ofen (1) und dem Brenner (2) in einer Reaktionszone (25) zwischen dem Plasma und den rohen, zu behandelnden Produkten (26) unter permanentem Untergetauchtsein in der Masse roher Produkte (26) aufrecht erhalten wird, indem der Ofen mit rohen Produkten kontinuierlich versorgt wird.

2. Verfahren nach Anspruch 1, dadurch gekennzeichnet, daß der Brenner (2) vertikal in dem Ofen (1) angeordnet ist, die rohen, zu behandelnden Produkte, die in den Ofen im oberen Teil aufgegeben werden, unter Schwerkraft in diesem absinken, wobei der untere Teil des Brenners permanent in besagte Produkte (26) eingetaucht ist und die geschmolzenen Produkte des Schmelzbades (23) durch Schwerkraft abfließen.

3. Verfahren nach Anspruch 1 oder 2, dadurch gekennzeichnet, daß man in Zeitintervallen die Art und Anteile der Bestandteile der zu behandelnden Produkte analysiert und ausgehend von diesen Analysen die Art und Anteile verschiedener fester Additive bestimmt, die den Produkten vor Einführung in den Ofen (1) zum Verbessern der Zuführung von Produkten zur Reaktionszone (25), der Schmelzbedingungen und der Bedingungen der Erzeugung und des Auffangens von in der Reaktionszone freigegebenen Gasen zugegeben werden.

4. Verfahren nach Anspruch 3, dadurch gekennzeichnet, daß das zugegebene Additiv ein pulverförmiges Produkt derart ist, daß es der in den Ofen (1) eingegebenen Mischung eine verbesserte Fließfähigkeit, ein besseres Gleiten im Inneren des Ofen (1) und eine bessere Homogenität verleiht.

5. Verfahren nach Anspruch 3, dadurch gekennzeichnet, daß das Additiv ein Produkt, etwa ein Flußmittel ist, das dazu bestimmt ist, die Schmelzpunkttemperatur der Mischung zu vermindern.

6. Verfahren nach Anspruch 3, dadurch gekennzeichnet, daß das Additiv ein Produkt vom Typ eines Oxidationsmittels ist, das dazu bestimmt ist, spezifische chemische Reaktionen mit den einzufangenden Metallen zu bewirken und die Masse der zu behandelnden Produkte (26) für in der Reaktionszone erzeugte Gase durchlässiger zu machen.

7. Verfahren nach einem der Ansprüche 3 bis 6, dadurch gekennzeichnet, daß die Menge an zugegebenen Additiven in der Größenordnung von 0 bis 5 Gew.-% der zu inertierenden Produkte ist.

8. Verfahren nach einem der Ansprüche 1 bis 7, dadurch gekennzeichnet, daß ein oder mehrere gasförmige Additive in den oder am Ausgang des Brenners (2) eingeführt werden.

9. Vorrichtung zur Durchführung des Verfahrens gemäß den Ansprüchen 1 und 2, umfassend
- einen Ofen (1, 1', 1"), der in seinem unteren Bereich einen mit einer Ausflußöffnung (14) für das flüssige Schmelzbad (23) versehenen Tiegel (13 bis 16) bildet,
- wenigstens einen Plasmabogenbrenner (2, 2'), der in dem Ofen zum Erzeugen und Unterhalten eines Plasmas (24, 24') zwischen besagtem Brenner und besagtem Tiegel derart angeordnet ist, daß der untere Teil des Brenners in der Masse der zu behandelnden Produkte (26) eingetaucht ist,
- Mittel (29, 30) zum kontinuierlichen Beschicken des Ofens (1) mit zu behandelnden Produkten,
- Mittel (31, 32) zum Abführen von in der Reaktionszone erzeugten Gasen und Brüden,
- Mittel (7, 8) zum Kühlen wenigstens eines Teils des Ofens (1) und
- Mittel (18, 19) zum Verfestigen von flüssigen aus besagtem Tiegel entfernten Produkten, die sich unter letzterem befinden.

10. Vorrichtung nach Anspruch 9, dadurch gekennzeichnet, daß der Körper des Ofens (1) aus mehreren Abschnitten (4, 5, 6) gebildet ist, die unabhängig voneinander gekühlt sind.

11. Vorrichtung nach Anspruch 9 oder 10, dadurch gekennzeichnet, daß der Tiegel (13 bis 16) die gesamte Bodenfläche des Ofens (1) einnimmt und mit einer Einrichtung (17) zum Absperren der Ausflußöffnung (14) besagten Tiegels versehen ist.

12. Vorrichtung nach Anspruch 9 oder 10, dadurch gekennzeichnet, daß der Tiegel teils durch die Masse von zu behandelnden Produkten (26) und teils durch ein Gießteil (15") gebildet wird, dem eine Absperreinrichtung (17) zugeordnet ist.

13. Vorrichtung nach einem der Ansprüche 9 bis 12, dadurch gekennzeichnet, daß sie einen Ofen (1') umfaßt, der mit mehreren, in Richtung auf den Tiegel (15') des Ofen gerichteten Brennern (2) versehen ist.

14. Vorrichtung nach einem der Ansprüche 9 bis 13, dadurch gekennzeichnet, daß die Innenwandung des Ofens (1) mit in verschiedenen Höhen in bezug auf den Tiegel (13 bis 16) angeordneten Niveaudetektoren (35) versehen ist, die zum Detektieren des Niveaus (27) zu behandelnder produkte (26) in dem Ofen und/oder des Niveaus des flüssiges Bades (23) ausgebildet sind.

15. Vorrichtung nach einem der Ansprüche 9 bis 14, dadurch gekennzeichnet, daß der Ofen (1) mit einer Einrichtung (34) versehen ist, die geeignet ist, ein Rütteln in der Masse zu behandelnder, im Ofen (1) befindlicher Produkte (26) zu erzeugen.

16. Vorrichtung nach einem der Ansprüche 9 bis 15, dadurch gekennzeichnet, daß sie eine Beschickungseinrichtung (28, 29, 38 bis 43) für zu behandelnde Produkte umfaßt, in der ein Mischer (41), verbunden mit einer Vielzahl von Zugabeeinrichtungen (48, 50) für feste Additive, unter der Steuerung einer Rechen- und Steuereinheit (47), die mit einem Analysator (46) für zu behandelnde Produkte verbunden ist, angeordnet ist.

17. Vorrichtung nach einem der Ansprüche 9 bis 12, dadurch gekennzeichnet, daß der Brenner (2, 2') mit mehreren Einrichtungen (68, 69; 70 bis 72) zum wahlweisen Einführen von gasförmigen oder plasmatischen Additiven ins Innere des Brenners oder an sein Ende verbunden ist.

18. Vorrichtung nach einem der Ansprüche 9 bis 17, dadurch gekennzeichnet, daß der Brenner (2, 2') in seiner Entfernung in bezug auf den Tiegel (15, 15', 15") einstellbar montiert ist.

19. Vorrichtung nach einem der Ansprüche 9 bis 18, dadurch gekennzeichnet, daß der Ofen eine geneigte Innenwandung derart aufweist, daß der Durchgangsquerschnitt der aus der Reaktionszone (25) in die Masse von zu behandelnden Produkten (26) abgegebenen Gase sich in dem Maße vergrößert, wie besagte Gase besagte Produkte durchströmen.

20. Vorrichtung nach einem der Ansprüche 9 bis 19, dadurch gekennzeichnet, daß sie zudem eine Rekuperationskreis (31, 32) im oberen Teil des Ofens (1) für aus der Reaktionszone stammende Gase und Brüden umfaßt, der einen Entstaubungszyklon (33) umfaßt, der mit einer Einheit (44) zur Behandlung von Brüden verbunden ist.

21. Vorrichtung nach einem der Ansprüche 9 bis 20, dadurch gekennzeichnet, daß die Beschickung von zu behandelnden Produkten im Ofen (1) und die Abführung von aus der Reaktionszone stammenden Gasen und Brüden durch konzentrische Leitungen (30, 31) zum Zweck der homogenen Verteilung besagter Produkte und homogenen Abführung besagter Gase und Brüden vorgenommen wird.

22. Vorrichtung nach einem der Ansprüche 9 bis 21, dadurch gekennzeichnet, daß die besagten Verfestigungsmittel Abschreckmittel (20) sind, die die flüssigen Schmelzprodukte in glasiges Granulat verwandeln.

23. Vorrichtung nach einem der Ansprüche 9 bis 21, dadurch gekennzeichnet, daß die besagten Verfestigungsmittel gekühlte Kokillen geeigneter Form für die zu erhaltenden Objekte sind.

24. Vorrichtung nach einem der Ansprüche 9 bis 23, dadurch gekennzeichnet, daß der oder die Brenner (2) von einen Typ sind, der mit nicht übertragenem Lichtbogen arbeitet.

25. Vorrichtung nach einem der Ansprüche 9 bis 23, dadurch gekennzeichnet, daß der oder die Brenner (2') von einem Typ sind, der mit übertragenem Lichtbogen arbeitet.

## Claims

1. Method for rendering inert by means of a plasma torch (2), especially a plasma arc torch, substances containing metals, in particular heavy metals, especially the purification residues of household waste incineration fumes, in which said substances, in a solid form, especially in a pulverulent or particulate form, are vitrified in a furnace (1) with the aid of said torch, and the molten substances are continuously or semi-continuously evacuated as they are gradually being formed in order to be cooled, the gases and fumes derived from the reaction zone being recovered and treated, characterized in that it consists to have the torch (2) function in such a way as to keep the arc plasma continuously submerged between the bath (23) for melting substances in the furnace (1) and the torch (2) in a reaction zone (25) between the plasma and the raw substances to be treated (26) by continuously feeding the furnace with raw subtances.

2. Method according to claim 1, characterized in that the torch (2) is disposed vertically in the furnace (1), the raw substances to be treated disposed at the upper portion in the furnace move in the latter via gravity, the lower portion of the torch being continuously immersed in said substances (26) and the molten substances of the melting bath (23) flowing by means of gravity.

3. Method according to claim 1 or 2, characterized in that the nature and proportions of the constituents of the substances to be treated are analysed at time intervals and, on the basis of these analyses, the nature and proportions of various solid additives added to the substances before being introduced into the furnace (1) are determined so as to improve the conditions for routing the substances towards the reaction zone (25), the melting conditions and the conditions for generating and recovering the gases originating from the reaction zone.

4. Method according to claim 3, characterized in that the additive added is a pulverulent substance able to provide the mixture disposed in the furnace (1) with improved fluidity, better sliding inside the furnace (1) and better homogeneity.

5. Method according to claim 3, characterized in that the additive is a substance, such as a furnace addition, intended to reduce the temperature of the melting points of the mixture.

6. Method according to claim 3, characterized in that the additive is an oxidizing type substance intended to create chemical reactions specific to the metals to be trapped and for rendering the mass of the substances to be treated (26) more permeable to the gases originating from the reaction zone.

7. Method according to any one of claims 3 to 6, characterized in that the amount of additives added is between 0 and 5 % in weight of the substances to be rendered inert.

8. Method according to any one of claims 1 to 7, characterized in that one or several gaseous additives are introduced into or at the outlet of the torch (2).

9. Installation for implementing the method according to claims 1 and 2, comprising :
- a furnace (1, 1', 1") defining at its lower portion a crucible (13 to 16) provided with a hole (14) for flowing from the melting liquid bath (23),
- at least one plasma arc torch (2, 2') disposed in the furnace so as to create and maintain a plasma (24, 24') between said torch and said crucible, so that the lower portion of the torch is immersed in the mass of the substances (26) to be treated,
- means (29, 30) for continuously feeding the furnace (1) with the substances (26) to be treated,
- means (31, 32) for evacuating the gases and fumes originating from the reaction zone,
- means (7, 8) for cooling at least one portion of the furnace,
- and means (18, 19) for solidifying the liquid substances evacuated by said crucible and disposed under the latter.

10. Installation according to claim 9, characterized in that the body of the furnace (1) is formed of several sections (4, 5, 6) cooled independently.

11. Installation according to claim 9 or 10, ,characterized in that the crucible (13 to 16) occupies the entire bottom surface of the furnace (1) and is provided with a device (17) for sealing the flow hole (14) of said crucible.

12. Installation according to claim 9 or 10, characterized in that the crucible is partly constituted by the mass of the substances(26) to be treated and partly by a pouring element (15") associated with a sealing device (17).

13. Installation according to any one of claims 9 to 12, characterized in that it comprises a furnace (1') equipped with several torches (2) slanted in the direction of the crucible (15') of the furnace.

14. Installation according to any one of claims 9 to 13, characterized in that the internal wall of the furnace (1) is provided with level detectors (35) disposed at various heights with respect to the crucible (13 to 16) and intended to detect the level (27) of the substances (26) to be treated in the furnace and/or the level of the liquid bath (23).

15. Installation according to any one of claims 9 to 14, characterized in that the furnace (1) is provided with a device (34) able to create shocks in the mass of the substances (26) to be treated present in the furnace (1).

16. Installation according to any one of claims 9 to 15, characterized in that it comprises a device (28, 29, 38 to 43) for routing the substances to be treated and containing a mixer (41) connected to a plurality of devices (48, 50) for adding solid additives and controlled by a control and calculation unit (47) connected to an analyser (46) for analysing the substances to be treated.

17. Installation according to any one of claims 9 to 12, characterized in that the torch (2, 2') is connected to several devices (68, 69 ; 70 to 72) for selectively introducing plasmagene or gaseous additives inside the torch or to its end.

18. Installation according to any one of claims 9 to 17, characterized in that the torch (2, 2') is mounted at an adjustable distance with respect to the crucible (15, 15', 15").

19. Installation according to any one of claims 9 to 18, characterized in that the furnace comprises an internal wall slanted so that the section for passage of the gases originating from the reaction zone (25) in the mass of the substances (26) to be treated shall gradually increase when said gases traverse said substances.

20. Installation according to any one of claims 9 to 19, characterized in that it further comprises a circuit (31, 32) for recovering at the upper portion of the furnace (1) the gases and fumes originating from the reaction zone, comprising a dust collection cyclone (33) connected to a fume treatment unit (44).

21. Installation according to any one of claims 9 to 20, characterized in that the routing of the substances to be treated in the furnace (1) and the evacuation of the gases and fumes originating from the reaction zone are provided by concentric pipes (30, 31) so as to homogeneously distribute said substances and homogeneously extract said gases and fumes.

22. Installation according to any one of claims 9 to 21, characterized in that said solidifying means are quenching means (20) transforming the liquid molten substances into vitrified substance granulates.

23. Installation according to any one of claims 9 to 21, characterized in that said solidifying means are cooled ingot mould shaped according to the objects to be obtained.

24. Installation according to any one of claims 9 to 23, characterized in that the torch(es) (2) are of the non-transferred arc type.

25. Installation according to any one of claims 9 to 23, characterized in that the torch(es) (2') are of the transferred arc type.
